# EUROPEAN PATENT APPLICATION

(11) **EP 4 481 989 A1**
(43) Date of publication of application: **25.12.2024**
(21) Application number: 23755634.5
(22) Date of filing: 04.01.2023
(51) Int. Cl.: H02J 7/14, H02J 50/10, B60L 53/00

(54) **VEHICLE AND VEHICLE-MOUNTED WIRELESS CHARGING APPARATUS THEREOF**

(30) Priority: 18.02.2022 CN 202220364379 U
(71) Applicant: Nio Technology (Anhui) Co., Ltd, Hefei City, Anhui 230601 (CN)
(72) Inventor: LU, Qian, Shanghai 201804 (CN); LI, Lv, Shanghai 201804 (CN); XU, Shaoyang, Shanghai 201804 (CN); TIAN, Guangming, Shanghai 201804 (CN); HE, Jianfeng, Shanghai 201804 (CN); LI, Yong, Shanghai 201804 (CN); MU, Lin, Shanghai 201804 (CN)
(74) Representative: Vossius & Partner Patentanwälte Rechtsanwälte mbB
(86) International application number: PCT/CN2023/070354
(87) International publication number: WO 2023/155630

(57) **Abstract**

The disclosure relates to the technical field of vehicles, and particularly provides a vehicle and an onboard wireless charging device thereof, aiming at solving the problem of temperature rise of a mobile phone due to poor heat dissipation in the process of charging the mobile phone by the existing onboard wireless charging device. The onboard wireless charging device provided in the disclosure comprises: a housing assembly provided with an accommodating space, an air supply duct being constructed in the accommodating space, the housing assembly being provided with a supporting portion, an air outlet of the air supply duct being located in the supporting portion, and a drain port being formed in a portion of the housing assembly corresponding to the air supply duct; a wireless charging module disposed in the accommodating space; and a blower disposed in the air supply duct, the supporting portion being provided in such a way that there is a gap between a bottom surface of the supporting portion and a mobile phone to be charged when the supporting portion supports the mobile phone to be charged. The disclosure provides the onboard wireless charging device, which can effectively solve the problem of excessive temperature rise during charging of the mobile phone, and can also achieve water discharge via the air supply duct so as to protect internal components.

## Description

The disclosure claims the priority to Chinese Patent Application No. CN 202220364379.4, filed on February 18, 2022, which is incorporated herein by reference in its entirety.

### TECHNICAL FIELD

The disclosure relates to the technical field of vehicles, and particularly provides a vehicle and an onboard wireless charging device thereof.

### BACKGROUND ART

A mobile phone has become an essential electronic device in people's daily life, and modern life has become inseparable from the use of the mobile phone. Restricted by the battery capacity of the mobile phone, the existing mobile phone needs to be charged frequently during use. Sometimes there is also a need for charging the mobile phone during driving, so most of vehicles are equipped with onboard mobile phone charging devices, especially wireless charging devices, to bring convenience for users to charge their mobile phones during riding or driving. Accordingly, wireless charging devices have gradually become the standard configuration for medium and high-end vehicles due to the fact that they are convenient to use without being limited by charging cables.

There are two main types of onboard wireless charging devices at present, one is a front-mounted type and the other is a rear-mounted type. A front-mounted onboard wireless charging device refers to a wireless charging device that is configured in a vehicle before delivery, and such a wireless charging device is generally mounted in a central storage box, an armrest box or other positions, so that the mobile phone can be charged once being placed on the charging device by a user.

The wireless charging device is convenient, but there is also the problem of overheating of the mobile phone during charging. For alleviating this problem, with respect to the existing front-mounted onboard wireless charging device, the heat generated during charging is usually reduced by sacrificing the charging power so as to avoid the overheating of the mobile phone, but this also leads to slower charging, which affects the using experience in daily life.

As an improvement, the invention patent with application No. 202021070971.0 provides a low-cost onboard wireless charging device with dual CAN interfaces. Specifically, the onboard wireless charging device comprises a housing, and a charging coil assembly and a control module disposed in the housing, wherein the control module comprises a PCBA board, and a processor, a CAN transceiver assembly and a charging coil controller disposed on the PCBA board; the charging coil assembly is located on the top of the PCBA board; and the charging coil controller is connected to the charging coil assembly and the processor, respectively. In addition, the onboard wireless charging device further comprises a fan assembly, the control module further comprises a fan controller disposed on the PCBA board, the fan assembly is disposed at the bottom of the housing, and the fan controller is connected to the processor and the fan assembly, respectively. The fan assembly comprises a fan and a fan cover, wherein the fan is secured to the bottom of the housing, the fan cover covers the fan, the fan cover is fixedly connected to the bottom of the housing, and the fan cover is provided with an air inlet hole. As can be seen, in this solution, the fan assembly is provided to supply cool air for the space around the mobile phone during charging, thereby reducing the temperature of the mobile phone to a certain extent, but according to the solution, the cool air is barely in contact with a main heating area of the mobile phone and has a very limited cooling effect on the mobile phone, thus the user experience is not ideal.

### SUMMARY

The disclosure is intended to solve or at least alleviate the above technical problems, i.e., to solve or alleviate the problem of temperature rise of a mobile phone due to poor heat dissipation in the process of charging the mobile phone by the existing onboard wireless charging device.

In a first aspect, the disclosure provides an onboard wireless charging device, which comprises: a housing assembly provided with an accommodating space, an air supply duct being constructed in the accommodating space, the housing assembly being further provided with a supporting portion, an air outlet of the air supply duct being located in the supporting portion, and a drain port being formed in a portion of the housing assembly corresponding to the air supply duct; a wireless charging module disposed in the accommodating space; and a blower disposed at a position in the air supply duct and close to an air inlet of the air supply duct, wherein the supporting portion is provided in such a way that there is a gap between a bottom surface of the supporting portion and a mobile phone to be charged when the supporting portion supports the mobile phone to be charged, and at least part of air blown from the air outlet is allowed to flow through the gap.

In the onboard wireless charging device provided in the disclosure, the air supply duct is constructed in the housing assembly, the air outlet of the air supply duct is disposed in the supporting portion for supporting the mobile phone to be charged, and the supporting portion is provided in such a way that there is a gap between the bottom surface of the supporting portion and the mobile phone to be charged when the supporting portion supports the mobile phone to be charged, so that during wireless charging of the mobile phone, air from the environment outside the housing assembly may be absorbed by the blower and delivered into the gap through the air supply duct. Since wall surfaces forming the gap are the bottom surface of the supporting portion (close to a power transmitting coil) and one surface of the mobile phone (close to a power receiving coil), the cool air delivered through the air supply duct may rapidly exchange heat with a heating surface of the mobile phone and a heating surface of the charging device at the same time, thereby efficiently reducing the temperature of the heating surface of the mobile phone to solve the problem of excessive temperature rise of the mobile phone. In addition, the drain port is disposed in the portion of the housing assembly corresponding to the air supply duct, and accordingly, when a liquid enters the inside of the charging device through the air outlet, the air supply duct is provided with the drain port and can be used as a water discharge passage to achieve dual use of the air supply duct, thus ensuring that internal components are not affected and also making the structure of the charging device more compact.

The wireless charging module of the disclosure comprises a power transmitting coil, a circuit board, a controller for controlling the power coil, and the like.

The supporting portion formed in the housing assembly is configured to support the mobile phone to be charged. The supporting portion may have a planar structure or a recessed structure. When the supporting portion has a recessed structure with an upward opening, the air outlet of the air supply duct is located in the supporting portion in such a way that it may be located in a bottom wall of the recessed structure, or in a side wall of the recessed structure, or at a position where the bottom wall and the side wall of the recessed structure intersect.

It should be noted that the blower comprises a fan and an electric motor, and the electric motor is configured to drive the fan to rotate.

For the onboard wireless charging device described above, in some feasible implementations, the housing assembly comprises a lower housing portion, with the drain port formed in the lower housing portion.

With this arrangement, water discharge can be more thorough and smoother.

It can be understood that the lower housing portion may be an independent member or a combination of a plurality of members. For example, if the lower housing portion comprises only a lower housing, and the lower housing is recessed downwardly to form a mounting space for accommodating the blower, then the drain port may be formed at a position of the lower housing corresponding to the mounting space, where the blower is above the lower housing after installation. Alternatively, the lower housing portion comprises a lower housing body and a blower cover, the blower is mounted below the lower housing body, and the blower cover covers the blower and is connected to the lower housing body, where the drain port may be formed at the blower cover.

For the onboard wireless charging device described above, in some feasible implementations, the lower housing portion comprises a lower housing body and a blower cover connected to a downward side of the lower housing body, thus constructing a mounting space in which the blower is located, where the drain port is disposed at the blower cover.

In this way, a specific implementation of the lower housing portion is provided. With this arrangement, the processing technology of the lower housing portion may be simplified, and the maintenance and change of the blower may be facilitated.

For the onboard wireless charging device described above, in some feasible implementations, an extension direction of the centerline of the drain port and a flow direction of air in the air supply duct are opposite to each other and staggered from each other.

With this arrangement, the air leakage rate of the air supply duct is reduced in a cost-effective manner.

It should be noted that the extension direction of the centerline of the drain port herein is aligned with a water discharge direction.

It can be understood that since the blower cover has a certain thickness, the drain port can be constructed in such a way that the extension direction of the centerline thereof and the flow direction of air in the air supply duct are opposite to each other and staggered from each other. In addition, the drain port may also be constructed in the form of a structure running through vertically relative to the blower cover.

For the onboard wireless charging device described above, in some feasible implementations, in a state of completed installation, there is an included angle between the centerline of the blower and the centerline of the air inlet.

With this arrangement, the direct impact between the air flow and the inner wall of the duct may be reduced, thereby reducing the vortex and reducing the noise.

For the onboard wireless charging device described above, in some feasible implementations, a part of the bottom surface of the supporting portion corresponding to the gap is provided with a protrusion structure such that the supporting portion is able to construct the gap via the protrusion structure.

In this way, a simpler way of constructing the gap is provided. The protrusion structure is disposed on the bottom surface of the supporting portion, the mobile phone to be charged is supported by the protrusion structure, and a surface of the mobile phone close to the power receiving coil is not in contact with the bottom surface of the supporting portion, so that the gap is constructed. This construction method is not only low in cost and simple in structure, but also enables the adjustment of size and type of the gap by adjusting parameters such as the number, distribution position, and isotropic dimensions of the protrusion structure during production, which is conducive to reducing the molding cost in a molding debugging stage, and may allow the wireless charging device to be applicable to a wider range of scenarios.

It can be understood that the protrusion structure may be a secured structure formed in the supporting portion, or it may be constructed as a structure capable of moving relative to the bottom surface of the supporting portion.

Furthermore, the number of protrusions included in the protrusion structure may be one or more. When the protrusion structure comprises one protrusion, the protrusion may be elongated to expand the contact area thereof with the mobile phone to be charged and to ensure that the mobile phone to be charged is stably placed on the supporting portion. When the protrusion structure comprises a plurality of protrusions, the respective protrusions are spaced apart as long as it is ensured that the mobile phone is stably supported on the supporting portion while the gap is constructed.

For the onboard wireless charging device described above, in some feasible implementations, the protrusion structure comprises a first protrusion at a position on the bottom surface of the supporting portion and close to the air outlet; and/or
the protrusion structure comprises a second protrusion at a position on the bottom surface of the supporting portion and away from the air outlet.

In this way, a feasible implementation of the protrusion structure is provided. When the protrusion structure comprises only a protrusion disposed at a position close to the air outlet, i.e., when only a first protrusion is provided, the constructed gap is a wedge-shaped gap, that is, there is an included angle between the surface of the mobile phone and a bottom surface of a support member. When the protrusion structure comprises only a protrusion disposed at a position away from the air outlet, i.e., when only a second protrusion is provided, the constructed gap is also a wedge-shaped gap. When the protrusion structure comprises a first protrusion and a second protrusion, an equidistant gap may be constructed. Of course, when the first protrusion and the second protrusion have different protrusion heights, a wedge-shaped gap is constructed. But the wedge-shaped gap is different from the aforementioned wedge-shaped gap. This construction method is conducive to blowing the cool air from the air outlet uniformly to respective positions of the gap, and accordingly facilitating improvement of the heat dissipation effect.

For the onboard wireless charging device described above, in some feasible implementations, the air outlet is formed at a position of the supporting portion corresponding to the gap.

With this arrangement, air output from the air supply duct may be more poured into the gap, so that more heat emitted from the mobile phone and more heat emitted from the wireless charging device are carried away, thereby improving the heat dissipation effect.

It can be understood that the way that the position of the air outlet of the air supply duct corresponds to the gap may refer to that the air outlet is provided at the bottom wall of the supporting portion, the bottom wall corresponding to the gap. When the supporting portion has a recessed structure with an upward opening, the air outlet may also be provided at a position where the bottom wall of the supporting portion and the side wall of the supporting portion intersect.

For the onboard wireless charging device described above, in some feasible implementations, the supporting portion has a recessed structure.

The supporting portion is constructed as the recessed structure, so that the mobile phone to be charged can be restrained in a plurality of directions, solving the problem of the mobile phone slipping down due to vibration of a vehicle body during driving.

For the onboard wireless charging device described above, in some feasible implementations, the recessed structure comprises a bottom wall and a side wall, and the air outlet is formed at a position where the bottom wall and the side wall intersect.

As the air outlet is provided at the position where the bottom wall and the side wall intersect, the air outlet is hidden, which may improve the overall aesthetics of the product.

For the onboard wireless charging device described above, in some feasible implementations, a foreign object-proof structure is also provided at a position in the air supply duct and close to the air outlet.

With the arrangement of the foreign object-proof structure, foreign objects such as coins and keys may be effectively prevented from slipping to the inside of the charging device from the air outlet.

It can be understood that the foreign object-proof structure may be a protective screen disposed at the air outlet, one or more protective columns spaced apart, or the like.

For the onboard wireless charging device described above, in some feasible implementations, the housing assembly comprises an upper housing portion, with the supporting portion formed on the upper housing portion.

The supporting portion is formed on the upper housing portion, i.e., a shell of the wireless charging device is combined with the support member for holding the mobile phone, thereby reducing the distance between the power transmitting coil and the power receiving coil inside the mobile phone, improving the coupling efficiency between the power transmitting coil and the power receiving coil, and accordingly facilitating improvement of the charging efficiency.

It can be understood that the upper housing portion may be an independent member or a combination of a plurality of members.

For the onboard wireless charging device described above, in some feasible implementations, the upper housing portion comprises an upper housing body and a non-slip portion connected to the upper housing body, and the protrusion structure is disposed on the non-slip portion.

In this way, a preferred implementation of the upper housing portion is provided. The arrangement of the non-slip portion is conducive to enhancing the stability of the relative position of the mobile phone and the charging device, thereby ensuring the smoothness of the charging process.

It can be understood that the non-slip portion may be disposed only in part of the area of the upper housing body corresponding to the supporting portion, or it may cover the entire surface of the upper housing body corresponding to the supporting portion, for example, by performing a rubber covering treatment to the upper housing body.

For the onboard wireless charging device described above, in some feasible implementations, a plurality of guide ribs are spaced apart on a surface of the non-slip portion, and the protrusion structure is disposed on the guide ribs.

The arrangement of the guide ribs helps to guide the air discharged from the air outlet to respective positions in the gap more effectively. Since the protrusion structure is disposed on the guide ribs, it is possible to avoid interfering with the airflow between adjacent guide ribs.

For the onboard wireless charging device described above, in some feasible implementations, the non-slip portion is made of one or more of silicone, silicone rubber or rubber.

In a second aspect, the disclosure further provides a vehicle, which comprises the onboard wireless charging device as described in any of the foregoing technical solutions.

For the vehicle described above, in some feasible implementations, the vehicle comprises an armrest box, and the onboard wireless charging device is disposed in the armrest box.

It can be understood that the vehicle is provided with the onboard wireless charging device as described in any of the foregoing technical solutions, and accordingly has all the technical effects of the onboard wireless charging device described above, which will not be described in detail herein again.

Solution 1. An onboard wireless charging device, comprising:
a housing assembly provided with an accommodating space, an air supply duct being constructed in the accommodating space, the housing assembly being further provided with a supporting portion, and an air outlet of the air supply duct being located in the supporting portion,
wherein a drain port is formed in a portion of the housing assembly corresponding to the air supply duct;
a wireless charging module disposed in the accommodating space; and
a blower disposed at a position in the air supply duct and close to an air inlet of the air supply duct,
wherein the supporting portion is provided in such a way that there is a gap between a bottom surface of the supporting portion and a mobile phone to be charged when the supporting portion supports the mobile phone to be charged, and at least part of air blown from the air outlet is allowed to flow through the gap.

Solution 2. The onboard wireless charging device according to solution 1, wherein the housing assembly comprises a lower housing portion, with the drain port formed in the lower housing portion.

Solution 3. The onboard wireless charging device according to solution 2, wherein the lower housing portion comprises a lower housing body and a blower cover connected to a downward side of the lower housing body, thus constructing a mounting space in which the blower is located,
wherein the drain port is disposed at the blower cover.

Solution 4. The onboard wireless charging device according to solution 3, wherein an extension direction of the centerline of the drain port and a flow direction of air in the air supply duct are opposite to each other and staggered from each other.

Solution 5. The onboard wireless charging device according to solution 3, wherein in a state of completed installation, there is an included angle between the centerline of the blower and the centerline of the air inlet.

Solution 6. The onboard wireless charging device according to solution 2, wherein a part of the bottom surface of the supporting portion corresponding to the gap is provided with a protrusion structure such that
the supporting portion is able to construct the gap via the protrusion structure.

Solution 7. The onboard wireless charging device according to solution 6, wherein the protrusion structure comprises a first protrusion at a position on the bottom surface of the supporting portion and close to the air outlet; and/or
the protrusion structure comprises a second protrusion at a position on the bottom surface of the supporting portion and away from the air outlet.

Solution 8. The onboard wireless charging device according to solution 1, wherein the air outlet is formed at a position of the supporting portion corresponding to the gap.

Solution 9. The onboard wireless charging device according to solution 8, wherein the supporting portion has a recessed structure.

Solution 10. The onboard wireless charging device according to solution 9, wherein the recessed structure comprises a bottom wall and a side wall, and the air outlet is formed at a position where the bottom wall and the side wall intersect.

Solution 11. The onboard wireless charging device according to solution 10, wherein a foreign object-proof structure is also provided at a position in the air supply duct and close to the air outlet.

Solution 12. The onboard wireless charging device according to solution 6, wherein the housing assembly comprises an upper housing portion, with the supporting portion formed on the upper housing portion.

Solution 13. The onboard wireless charging device according to solution 12, wherein the upper housing portion comprises an upper housing body and a non-slip portion connected to the upper housing body, and the protrusion structure is disposed on the non-slip portion.

Solution 14. The onboard wireless charging device according to solution 13, wherein a plurality of guide ribs are spaced apart on a surface of the non-slip portion, and the protrusion structure is disposed on the guide ribs.

Solution 15. The onboard wireless charging device according to solution 14, wherein the non-slip portion is made of one or more of silicone, silicone rubber or rubber.

Solution 16. A vehicle, comprising an onboard wireless charging device according to any one of solutions 1 to 15.

Solution 17. The vehicle according to solution 16, wherein the vehicle comprises an armrest box, and the onboard wireless charging device is disposed in the armrest box.

### BRIEF DESCRIPTION OF THE DRAWINGS

The disclosed content of the disclosure will become more readily understood with reference to the accompanying drawings. A person skilled in the art readily understands that: the accompanying drawings are merely for the purpose of illustration, and are not intended to limit the scope of protection of the disclosure. In addition, like numerals are used to designate like elements in the drawings in which:
FIG. 1 is a schematic diagram of the assembly of an onboard wireless charging device according to an embodiment of the disclosure;
FIG. 2 is a schematic exploded diagram of an onboard wireless charging device according to an embodiment of the disclosure;
FIG. 3 is a top view of an onboard wireless charging device according to an embodiment of the disclosure;
FIG. 4 is a sectional view taken along line A-A of FIG. 3;
FIG. 5 is a first schematic exploded diagram of an upper housing portion of an onboard wireless charging device according to an embodiment of the disclosure; and
FIG. 6 is a second schematic exploded diagram of the upper housing portion of the onboard wireless charging device according to an embodiment of the disclosure.

### List of reference signs:

1. Housing assembly;
10. Upper housing body; 100. First air outlet; 101. Bottom wall; 102. Side wall; 103. Straight wall; 104. First arc-shaped wall; 105. First vertical wall; 106. Second vertical wall;
11. Middle housing portion; 110. Second arc-shaped wall; 111. Column;
12. Lower housing body; 120. Third arc-shaped wall;
13. Blower cover; 130. Air inlet; 131. Fourth arc-shaped wall; 132. Drain port;
14. Non-slip portion; 140. Second air outlet; 141. Protrusion structure; 142. Guide rib;
15. Air supply duct;
2. Wireless charging module;
20. PCBA board; 21. Power transmitting coil; 22. Shielded PCB board;
3. Blower.

### DETAILED DESCRIPTION OF EMBODIMENTS

Preferred implementations of the disclosure are described below with reference to the accompanying drawings. It should be understood by those skilled in the art that these implementations are only for explaining the technical principles of the disclosure and are not intended to limit the scope of protection of the disclosure.

In addition, to better illustrate the disclosure, numerous specific details are given in the following detailed implementations. It should be understood by those skilled in the art that the disclosure may be implemented without some specific details.

It should be noted that the orientation terms used herein such as "upper", "lower", "inner", and "outer" are all based on the front and rear directions of the vehicle after components are mounted on the vehicle. In addition, the terms "first", "second", "third" and "fourth" are for descriptive purposes only and should not be construed as indicating or implying relative importance.

Before an onboard wireless charging device according to an embodiment of the disclosure is explained, the principle of realizing a charging function of the onboard wireless charging device is first illustrated: the principle of enabling the onboard wireless charging device to realize wireless charging of a mobile phone mainly refers to the use of Ampere's law and Faraday's law; the onboard wireless charging device is provided with a power transmitting coil therein, and a mobile phone is provided with a power receiving coil therein; and a wireless charging process is that the power transmitting coil generates an alternating current after receiving power, and then generates an alternating magnetic field that acts on the power receiving coil, so that an induced electromotive force is generated within the power receiving coil, and the induced electromotive force is transformed into a direct current for charging a battery by a power converter.

There is energy loss in an energy conversion process, which causes overheating of the mobile phone. In order to solve this problem, an embodiment of the disclosure provides an onboard wireless charging device. The onboard wireless charging device provided in the embodiment of the disclosure is described below in conjunction with the accompanying drawings.

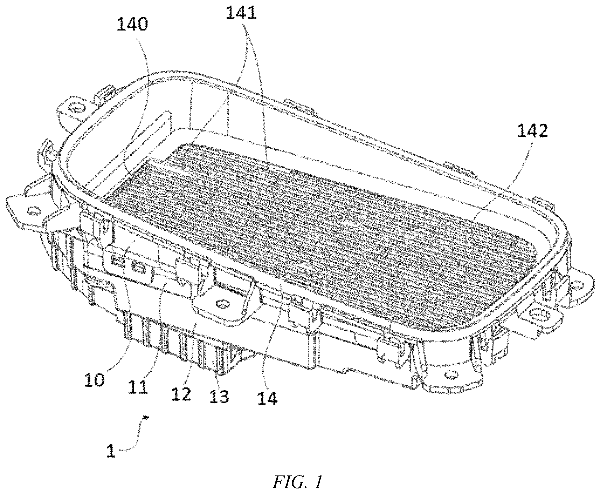

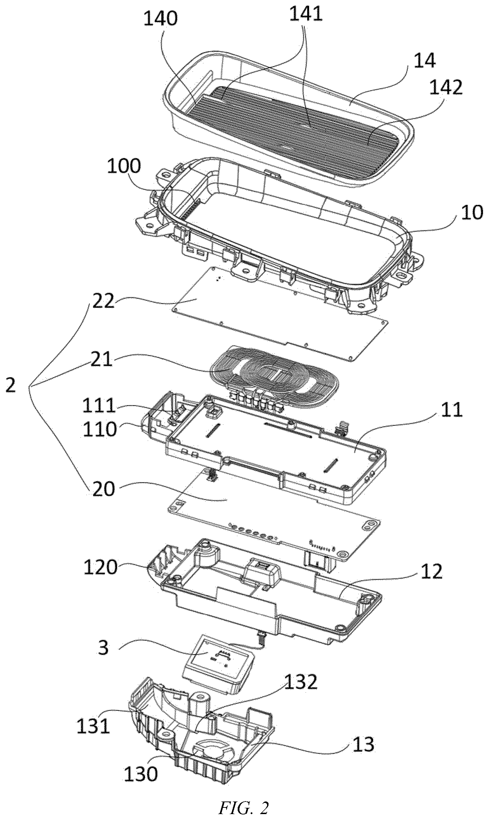

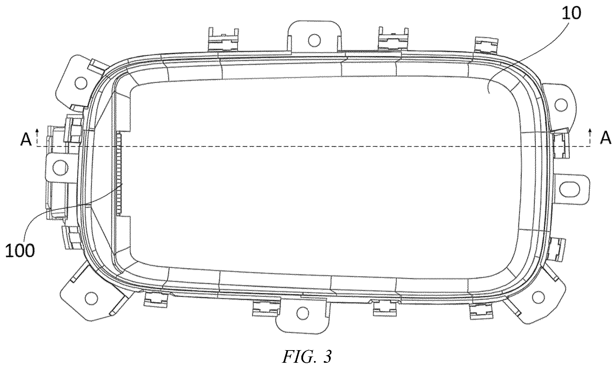

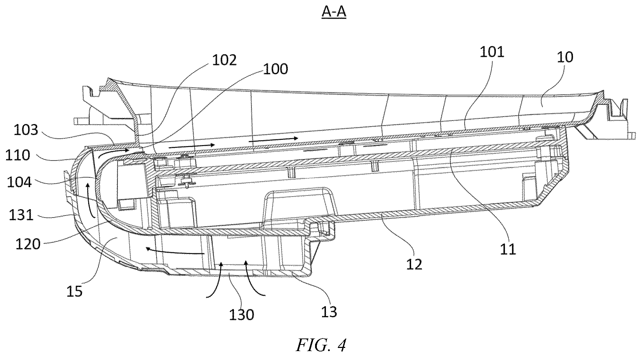

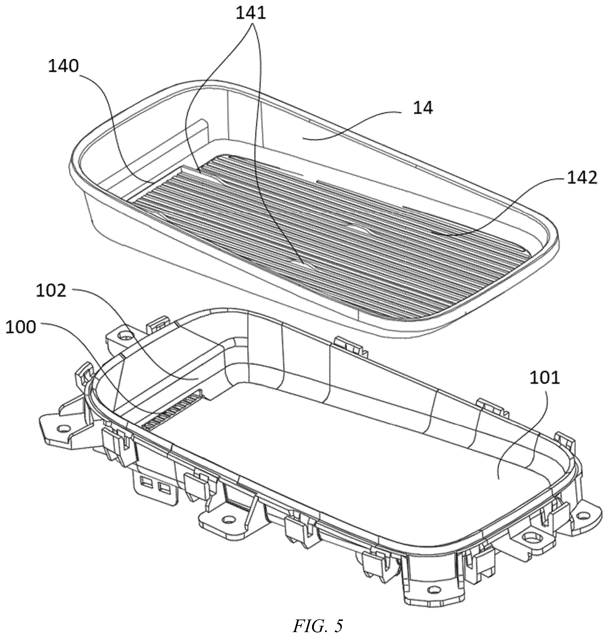

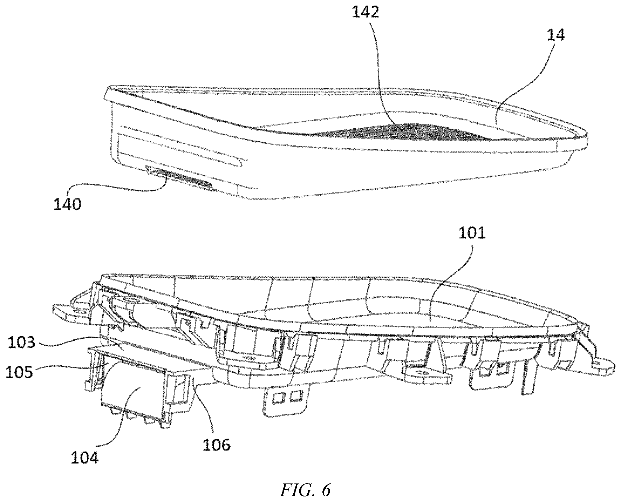

In the accompanying drawings, FIG. 1 is a schematic diagram of the assembly of an onboard wireless charging device according to an embodiment of the disclosure; FIG. 2 is a schematic exploded diagram of an onboard wireless charging device according to an embodiment of the disclosure; FIG. 3 is a top view of an onboard wireless charging device according to an embodiment of the disclosure; FIG. 4 is a sectional view taken along line A-A of FIG. 3; FIG. 5 is a first schematic exploded diagram of an upper housing portion of an onboard wireless charging device according to an embodiment of the disclosure; and FIG. 6 is a second schematic exploded diagram of the upper housing portion of the onboard wireless charging device according to an embodiment of the disclosure.

The onboard wireless charging device provided in the embodiment of the disclosure includes a housing assembly, a wireless charging module and a blower. The housing assembly is provided with an accommodating space, an air supply duct is constructed in the accommodating space, the housing assembly is further provided with a supporting portion, an air outlet of the air supply duct is located in the supporting portion, the supporting portion is configured to support a mobile phone to be charged, and a drain port is formed in a portion of the housing assembly corresponding to the air supply duct. The wireless charging module is disposed in the accommodating space constructed in the housing assembly. The blower is disposed at a position in the air supply duct and close to an air inlet of the air supply duct. When the blower is operating, the air in the air supply duct and outside the housing assembly is blown out of the air outlet of the air supply duct at a certain speed.

The supporting portion of the disclosure is provided in such a way that there is a gap between a bottom surface of the supporting portion and the mobile phone to be charged when the supporting portion supports the mobile phone to be charged, and at least part of air blown from the air outlet is allowed to flow through the gap, so that heat dissipated from the mobile phone is carried away by air circulation, achieving the purpose of cooling the mobile phone.

Specifically, as shown in FIG. 2, a wireless charging module 2 provided in an embodiment of the disclosure includes a power transmitting coil 21, a circuit board connected to the power transmitting coil 21, a controller disposed on the circuit board and electrically connected to the power transmitting coil 21, and the like. The circuit board in this embodiment includes a shielded PCB board 22 disposed above the power transmitting coil 21 and a PCBA board 20 disposed below the power transmitting coil 21. Both the shielded PCB board 22 and the PCBA board 20 are fixedly connected to a middle housing portion 11 of a housing assembly 1. The power transmitting coil 21 in this embodiment includes three coils that are stacked and independent of each other. All the coils are secured to the middle housing portion 11. Each coil is electrically connected to a coil controller, and accordingly, for situations where different models of mobile phones may be configured with power receiving coils at different positions, the wireless charging module 2 may select from the three coils the one that can be most adapted to a mobile phone to be charged, so as to charge the mobile phone. The wireless charging module 2 is powered by a storage battery of a vehicle.

As shown in FIGS. 1 and 2, the housing assembly 1 in this embodiment includes an upper housing portion, a middle housing portion 11, and a lower housing portion. The three portions are connected to construct an accommodating space in which the wireless charging module 2 is placed. Specifically, the shielded PCB board 22 and the coils in the wireless charging module 2 are located above a partition of the middle housing portion 11, and the PCBA board 20 is located below the partition of the middle housing portion 11. After connection, the housing assembly 1 is further provided with an air supply duct 15, the air supply duct 15 being located in the accommodating space and on the periphery of the wireless charging module 2.

The housing assembly 1 and how to construct the air supply duct 15 in the housing assembly 1 are described below with reference to the accompanying drawings.

As shown in FIGS. 1 to 6, the upper housing portion includes an upper housing body 10 and a non-slip portion 14 connected to the upper housing body 10. As shown in FIGS. 5 and 6, the upper housing body 10 is constructed as a recessed structure with an upward opening, the non-slip portion 14 has a shape adapted to an inner wall surface of the recessed structure, and the non-slip portion 14 can fit and be connected to the inner wall surface of the recessed structure of the upper housing body 10. The upper housing body 10 and the non-slip portion 14 together construct the supporting portion for supporting the mobile phone to be charged. It can be understood that the configuration of the non-slip portion 14 is not a must.

With continued reference to FIGS. 5 and 6, the recessed structure of the upper housing body 10 includes a bottom wall 101 and a side wall 102 extending upwardly from an edge of the bottom wall 101, a first air outlet 100 is formed at a position where the bottom wall 101 and the side wall 102 intersect, and the first air outlet 100 is connected to the air supply duct 15 constructed in the housing assembly 1 as a part of the air outlet of the air supply duct 15. As shown in FIG. 6, the part of the upper housing body 10 corresponding to the air supply duct 15 includes a straight wall 103, a first arc-shaped wall 104, a first vertical wall 105, and a second vertical wall 106. The straight wall 103 is disposed above the first arc-shaped wall 104, the first vertical wall 105 and the second vertical wall 106 are connected to two sides of the flat wall 103 and the first arc-shaped wall 104 respectively, so that a section of the air supply duct 15 close to the air outlet is constructed. The structure of this section is shown with reference to FIGS. 4 and 6.

As shown in FIG. 5, the recessed structure of the non-slip portion 14 is provided with a second air outlet 140 at a position corresponding to the first air outlet 100, the second air outlet 140 matches the first air outlet 100, and the two together form the air outlet of the air supply duct 15. A protrusion structure 141 is disposed on a bottom surface of the recessed structure of the non-slip portion 14. The protrusion structure 141 in this embodiment includes a first protrusion (not shown) and a second protrusion (not shown). The first protrusion is located at a position on the bottom surface of the non-slip portion 14 and close to the second air outlet 140. The first protrusion has an elongated structure. There are two first protrusions located at two sides of the second air outlet 140, respectively. The second protrusion is located at a position on the bottom surface of the non-slip portion 14 and away from the second air outlet 140. The second protrusion also has an elongated structure. There are two second protrusions. When the mobile phone to be charged is placed on the supporting portion, the first protrusion and the second protrusion form a gap between the bottom surface of the supporting portion of the non-slip portion 14 and the mobile phone to be charged, and at least part of air blown from the air outlet is allowed to flow through the gap, thereby realizing rapid heat dissipation of the mobile phone. A path of the air supply duct 15 for blowing the cool air into the gap is as shown by the arrows in FIG. 4. The mobile phone to be charged that forms the gap is not illustrated in FIG. 4.

Further, in order to enable the air from the air outlet to better reach the side of the gap that is away from the air outlet, a plurality of guide ribs 142 are spaced apart on the bottom surface of the non-slip portion 14 provided in this embodiment. An air guide slot is formed between adjacent guide ribs 142, the air guide slot can guide the air to circulate toward the side of the gap that is away from the air outlet, thereby sufficiently absorbing heat emitted by the mobile phone.

To avoid interference with the air flow, the first protrusion and the second protrusion are disposed on the guide ribs 142. Sizes of the first protrusion, the second protrusion, and the guide ribs 142 are determined according to tests, which ensures sufficient heat dissipation without affecting the charging efficiency. In addition, the position of the protrusion structure 141 needs to avoid a camera of the mobile phone, thus avoiding affecting the size of the constructed gap due to the interference; and the width of the air outlet needs to meet the charging requirements of various models of mobile phones.

The non-slip portion 14 is made of one or more of silicone, silicone rubber or rubber.

As shown in FIGS. 2 to 4, the middle housing portion 11 is connected between the upper housing portion and the lower housing portion, and is mainly configured to support the circuit board and the power transmitting coil 21, and to construct a part of the air supply duct 15. The middle housing portion 11 has a partition (not shown) for separating the circuit board. A second arc-shaped wall 110 is provided at one end of the partition. In a state of completed installation, the second arc-shaped wall 110 is outside the first arc-shaped wall 104, forming a part of the side wall 102 of the air supply duct 15. As shown in FIG. 2, the middle housing portion 11 is connected to the upper housing body 10 by a snap-fit. The upper housing body 10 is provided with a plurality of sockets in a circumferential direction, and a plurality of snap-fit fasteners adapted to the sockets are formed in the circumferential direction of the middle housing portion 11. The snap-fit connection between the upper housing body 10 and the middle housing portion 11 is achieved by the matching between the snap-fit fasteners and the sockets.

As shown in FIGS. 2 to 4, the lower housing portion includes a lower housing body 12 and a blower cover 13, and the blower cover 13 is connected to a downward side of the lower housing body 12 by screws, thus constructing a mounting space for mounting a blower 3. The blower 3 is located in the mounting space. The lower housing body 12 has a third arc-shaped wall 120, the blower cover 13 has a fourth arc-shaped wall 131, and the third arc-shaped wall 120 and the fourth arc-shaped wall 131 are both configured to form the air supply duct 15. As shown in FIG. 4, with the arrangement of the arc-shaped walls, the air supply duct 15 is constructed as an arc-shaped duct with smooth inside, which facilitates the smooth circulation of air.

The onboard wireless charging device in this embodiment is a front-mounted wireless charging device, which is configured before the vehicle leaves the factory, and is configured in an armrest box of the vehicle. The armrest box is usually configured to hold a cup in addition to charging, and accordingly, there is a risk of a liquid entering the interior of the charging device through the air outlet. In order to solve the problem, the wireless charging device in this embodiment is also provided with a drain port 132 in a portion corresponding to the air supply duct 15, and the air supply duct 15 is also used as a water discharge passage, thereby simultaneously achieving the purpose of air supply and water discharge, and making the structure of the device more compact.

Specifically, as shown in FIGS. 2 and 4, the drain port 132 is provided in the blower cover 13. When the liquid enters the air supply duct 15 from the air outlet, it flows to the drain port 132 and is discharged under the guiding of an arc-shaped inner wall of the air supply duct 15. In this embodiment, in order to reduce air leakage, an extension direction of the centerline of the drain port 132 and a flow direction of air in the air supply duct 15 are opposite to each other and staggered from each other.

In this embodiment, the blower 3 is obliquely mounted in the mounting space after a number of tests. Specifically, there is an included angle between the centerline of the blower 3 and the centerline of the air inlet 130. As shown in FIG. 4, the blower is not illustrated in FIG. 4 for ease of viewing the duct. It can be understood that, in the state of completed installation, the centerline of the blower 3 is inclined toward the upper right, the centerline of the air inlet 130 extends in a vertical direction, and there is an included angle between the two centerlines, which can reduce the collision between air output of the blower 3 and the inner wall of the air supply duct 15, thereby reducing the noise.

Further, in order to prevent foreign objects from slipping into the charging device from the air outlet, the air supply duct 15 in this embodiment is also provided with a foreign object-proof structure at a position close to the air outlet. Specifically, as shown in FIG. 2, a plurality of columns 111 vertically extending are disposed at a position where the head of the middle housing portion 11 is close to the air supply duct 15. The respective columns 111 are spaced apart in a length direction of the air outlet, thus forming a grille structure close to the air outlet, which can effectively prevent foreign objects from entering. More specifically, the columns 111 formed on the middle housing portion 11 penetrate the upper housing body 10 to extend into the air supply duct 15, and also play a role in positioning.

The wireless charging device in this embodiment is applicable to fuel vehicles, electric vehicles, and the like.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art can make equivalent changes or replacements to the related technical features without departing from the principles of the disclosure, and all the technical solutions after the changes or the replacements fall within the scope of protection of the disclosure.

## Claims

1. An onboard wireless charging device, comprising:
a housing assembly provided with an accommodating space, an air supply duct being constructed in the accommodating space, the housing assembly being further provided with a supporting portion, and an air outlet of the air supply duct being located in the supporting portion,
wherein a drain port is formed in a portion of the housing assembly corresponding to the air supply duct;
a wireless charging module disposed in the accommodating space; and
a blower disposed at a position in the air supply duct and close to an air inlet of the air supply duct,
wherein the supporting portion is provided in such a way that there is a gap between a bottom surface of the supporting portion and a mobile phone to be charged when the supporting portion supports the mobile phone to be charged, and at least part of air blown from the air outlet is allowed to flow through the gap.

2. The onboard wireless charging device according to claim 1, wherein the housing assembly comprises a lower housing portion, with the drain port formed in the lower housing portion.

3. The onboard wireless charging device according to claim 2, wherein the lower housing portion comprises a lower housing body and a blower cover connected to a downward side of the lower housing body, thus constructing a mounting space in which the blower is located,
wherein the drain port is disposed at the blower cover.

4. The onboard wireless charging device according to claim 3, wherein an extension direction of the centerline of the drain port and a flow direction of air in the air supply duct are opposite to each other and staggered from each other.

5. The onboard wireless charging device according to claim 3, wherein in a state of completed installation, there is an included angle between the centerline of the blower and the centerline of the air inlet.

6. The onboard wireless charging device according to claim 2, wherein a part of the bottom surface of the supporting portion corresponding to the gap is provided with a protrusion structure such that
the supporting portion is able to construct the gap via the protrusion structure.

7. The onboard wireless charging device according to claim 6, wherein the protrusion structure comprises a first protrusion at a position on the bottom surface of the supporting portion and close to the air outlet; and/or
the protrusion structure comprises a second protrusion at a position on the bottom surface of the supporting portion and away from the air outlet.

8. The onboard wireless charging device according to claim 1, wherein the air outlet is formed at a position of the supporting portion corresponding to the gap.

9. The onboard wireless charging device according to claim 8, wherein the supporting portion has a recessed structure.

10. The onboard wireless charging device according to claim 9, wherein the recessed structure comprises a bottom wall and a side wall, and the air outlet is formed at a position where the bottom wall and the side wall intersect.

11. The onboard wireless charging device according to claim 10, wherein a foreign object-proof structure is also provided at a position in the air supply duct and close to the air outlet.

12. The onboard wireless charging device according to claim 6, wherein the housing assembly comprises an upper housing portion, with the supporting portion formed on the upper housing portion.

13. The onboard wireless charging device according to claim 12, wherein the upper housing portion comprises an upper housing body and a non-slip portion connected to the upper housing body, and the protrusion structure is disposed on the non-slip portion.

14. The onboard wireless charging device according to claim 13, wherein a plurality of guide ribs are spaced apart on a surface of the non-slip portion, and the protrusion structure is disposed on the guide ribs.

15. The onboard wireless charging device according to claim 14, wherein the non-slip portion is made of one or more of silicone, silicone rubber or rubber.

16. A vehicle, comprising an onboard wireless charging device according to any one of claims 1 to 15.

17. The vehicle according to claim 16, wherein the vehicle comprises an armrest box, and the onboard wireless charging device is disposed in the armrest box.
